# EUROPEAN PATENT SPECIFICATION

(11) **EP 2 176 132 B1**
(45) Date of publication and mention of the grant of the patent: **19.12.2012**
(21) Application number: 08827156.4
(22) Date of filing: 05.08.2008
(51) Int. Cl.: B65D 47/20, B65D 47/26, G01F 11/26

(54) **DISPENSING DEVICE**
SPENDERVORRICHTUNG
DISPOSITIF DE DISTRIBUTION

(30) Priority: 06.08.2007 GB 0715278; 17.04.2008 GB 0807038
(43) Date of publication of application: 21.04.2010
(73) Proprietor: DS Smith Plastics Limited, London SW1P 1RZ (GB)
(72) Inventor: SMITH, William, Walter, Wallington SM6 9PW (GB); SMITH, Charles, Richard, Cowdrey, Wilts SP5 4DF (GB); WAJTRYT, Krzysztof, Sutton, SM1 1QR (GB)
(74) Representative: Howe, Steven
(86) International application number: PCT/IB2008/002809
(87) International publication number: WO 2009/019610

(56) References cited:
- EP-A- 0 952 090
- WO-A-01/79791
- WO-A-93/02339
- FR-A- 2 789 378
- NL-A- 6 916 794
- US-A- 5 186 367

## Description

This invention relates to a dispensing device, in particular one for dispensing predetermined amounts of liquid from a container.

There are a number of known systems for providing predetermined amounts of liquids such as detergents and fabric conditioners. In the simplest form the detergent container is provided with a cap which is marked on the interior with one or more filling levels each corresponding to a predetermined dose of liquid suitable for a particular size or type of laundry load.

So called "dosing balls" operate in a similar fashion. A plastic ball with an opening is marked with a scale. Once filled to a suitable level, the ball is inserted into the washing machine.

A problem with both systems is that they require two hands, one to hold the cap or ball and the other to pour from the container. A further problem with the cap system is that either the cap has to be washed out or there is potential for drips of the liquid when it is replaced on the container.

One solution is the so called dosing tabs where measured amounts of liquid are supplied in an envelope which dissolves as washing proceeds. However, this is an expensive and somewhat complicated solution.

WO 93/02339 discloses a dosing cap for dispensing dosed amounts of liquid from a container comprising a body securable to a container, the body including an outlet, and a dosing member operatively engaged with body such as to be movable along a path relative to the body from a first position through a second position to a third position, the dosing member defining a space which in the first position is accessible, wherein in the second position the body closes the space to form a dose cavity and in the third position the dose cavity is in communication with the outlet.

The present invention provides a dosing cap which is characterised in that the dosing cap is provided with means for returning the dosing member from the third position to the first position.

The dosing cap is simple in form comprising as it does two elements, the body and the dosing member, which makes it economical to manufacture. However, it is also effective and is capable of one handed operation.

The dosing member is suitably a shuttle which is reciprocally movable to and fro along the path. A shuttle form dosing member has been found to allow ready repeated dispensing of dosed amounts of liquid.

The body may include a structure engagable by the dosing member at the first and third positions. In one preferred form the body is annular and has a closure at one end, the closure being engaged by the dosing member in the third position. This is a simple way of defining the third position.

Suitably one of the dosing member and the closure has a protrusion which engages the other in the third position. The advantage of the protrusion is that this provides an off-set between the closure and the dosing member which facilitates return of the dosing member to the first position.

In a particularly preferred embodiment the return means comprises biasing means, the closure including the biasing means which is engaged by the dosing member in the third position and which biases the dosing member away from the closure and towards the first position. The provision of biasing means, which suitably comprises at least one spring, facilitates return of the dosing member to the first position following dispensing of a dose.

The outlet may be provided in the annular portion of the body adjacent the closure or it may be in the closure. In the latter case, a lid may also be provided for closing the outlet.

At the other end from the closure, the body may include at least one depending leg having an end portion shaped to engage the dosing member in the first position. This is a simple way of defining the first position and has been found to be particularly effective if there are plural legs, at least three. The at least three legs together define a cage or cradle for the dispensing member which ensures it does not become misaligned from the path.

In a particularly preferred form the dosing member comprises a pair of plates interconnected by a strut. It is therefore somewhat of the form of a spool or bobbin. The plates may also be interconnected by at least one web. The web serves to strengthen the dosing member.

The edges of the plates preferably sealingly engage the body in the second and third positions and are suitably in the form of lip seals. The sealing engagement of the plates with the body securely forms the dosing cavity and lip seals have been found to be particularly effective for this purpose.

The strut may comprise two conical elements, the larger ends of which are connected to the plates and the smaller ends to each other. This has been found to facilitate flow of liquid from the container into the space defined by the dosing member. The apertures in the strengthening webs are provided for the same purpose. In addition the shape of the strut facilitates moulding of the dosing member.

The body may include securement structure for securing the body to a container. One suitable form for the securement structure is as threads for engagement with corresponding threads on the container. Alternative forms are however possible, for example, a snap fit connection could be used.

The body preferably includes an air vent which is in communication with the dose cavity in the third position of the dosing member. This allows air to flow into the body and fill the space from which liquid has been vacated and equalise the pressure within the body. The inflow of air gives smooth liquid outflow with a stabilised flow profile.

The invention will now be further described by way of example with reference to the accompanying drawings in which:
Figure 1 is a side view of a dosing cap ;
Figure 2 is a section on A-A of Figure 1;
Figure 3 is a perspective view in cut away section of the dosing cap of Figure 1;
Figures 4 to 7 are further perspective views in cut away section illustrating operation of the dosing cap of Figure 1; and
Figure 8 is an axial section through an embodiment of a dosing cap in accordance with the invention, without section lines.

The dosing cap shown in the Figures comprises a body 4 and a dosing member 6.

The body 4 is annular and has an outlet 8 adjacent one end which is closed by a closure 10. The outlet 8 is in the form of a plurality of ports.

Alternatively, the outlet could be in the closure 10, in which case a lid may be included. The outlet need not be in the form of ports and instead could be a simple aperture.

At the other end from the closure 10, the body 4 has a skirt 12 formed with a thread 14 to enable it to be attached to a bottle having a corresponding thread. Alternative attachment structure could be provided, for example the body 4 could be snap fit onto a bottle.

Below the skirt 12, the body 4 has plural depending legs 16 each formed at the free end with a stop or dog 18.

The dosing member 6 comprises two plates 20, 22 connected and spaced by a strut 24 and a number of webs 26. The plates 20, 22 are each formed with a lip seal 28 at their outer edge dimensioned and shaped to sealingly engage the interior of the annular portion of the body 4.

The strut 24 takes the form of two conical elements connected at their larger ends with the plates 20, 22 and at their smaller ends with each other. This shape facilitates moulding. The webs 26 may be formed with apertures 30 as shown.

As illustrated the dosing member 6 is engaged with the body 4. This is achieved by making the legs 16 sufficiently flexible that they can be bent outwardly to allow the dosing member 6 to be positioned with plate 20 sealingly engaged with the interior of the annular portion of the body 4. The legs 16 are then released so that they spring back and form a cage or cradle for receiving the dosing member 6 which under gravity will come to rest with plate 22 engaged by dogs 18.

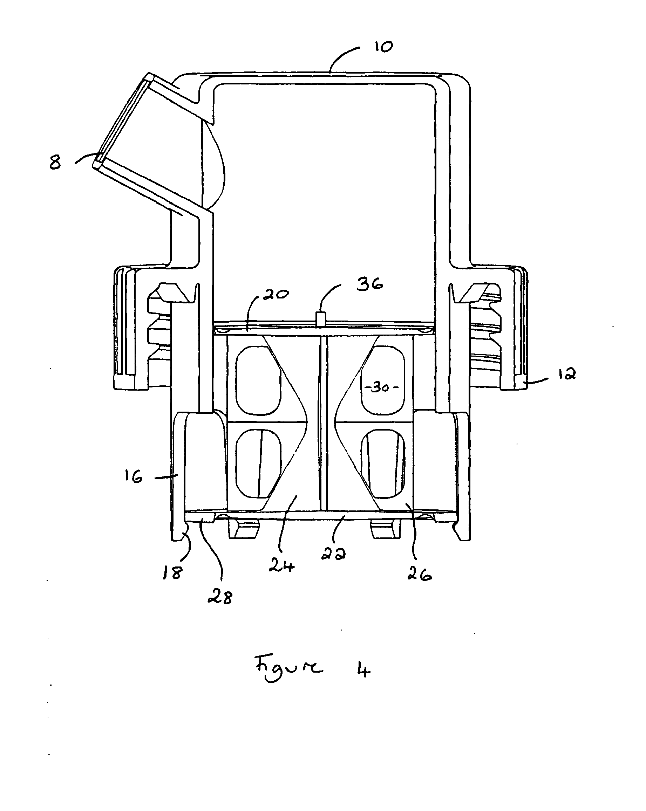

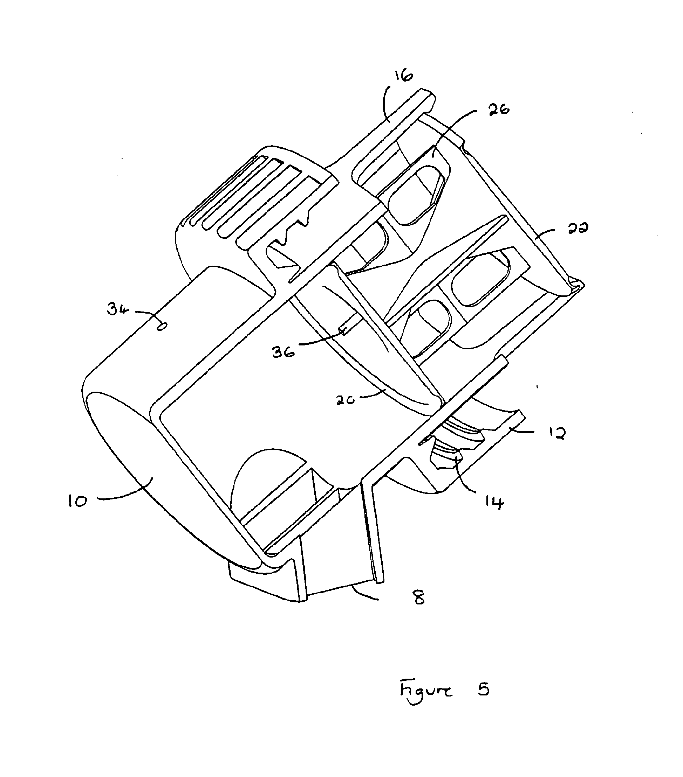

This first relative position of the body 4 and dosing member 6 is illustrated in Figure 4. In this position the body is connected to a bottle containing liquid by screw threads 14. The container and connected dosing cap 2 are then inverted together as illustrated in Figure 5. As will be appreciated, liquid will then fill the space defined between the plates 20, 22 of the dosing member 6 around the strut 24 and between the webs 26. The shape of the strut 24 and the apertures 30 of the webs 26 have been found to facilitate this process.

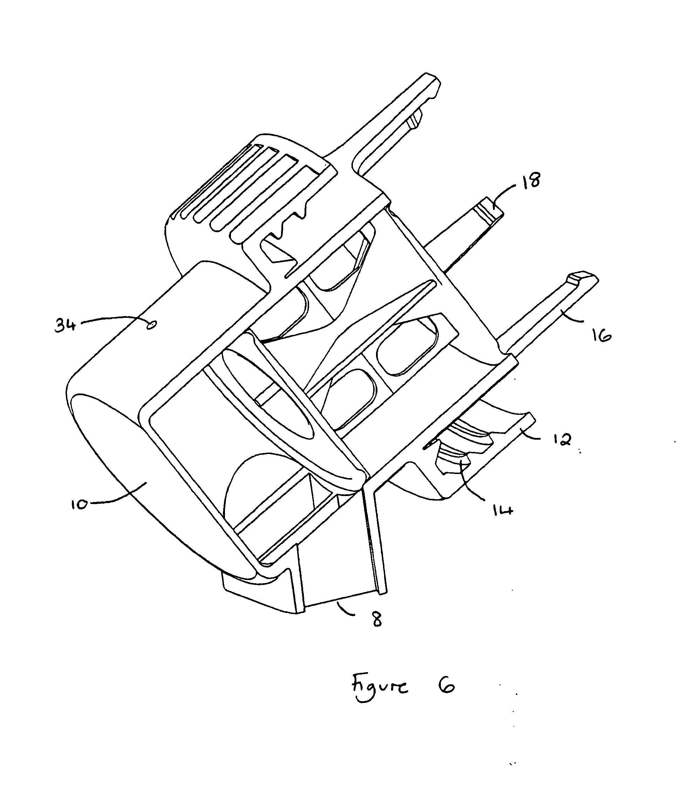

Gravity and the weight of the liquid on plate 22 may then move the dosing member 6 through a second position illustrated in Figure 6 in which the plate 22 sealingly engages the annular portion of the body 4. This movement however is preferably primarily achieved by use of the dosing cap 2 with a flexible bottle or other container which can be squeezed to force the dosing member 6 into the second position of Figure 6.

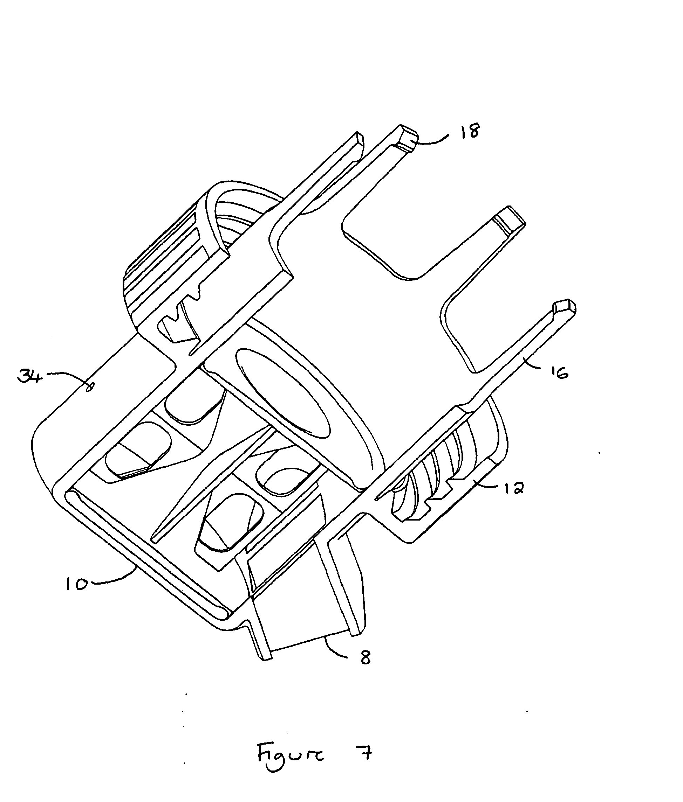

In that second position the dosing member 6 and body 4 together form a dosing cavity 32 in which a dose of liquid is contained. Further movement of the dosing member 6 brings it to the third, dispensing, position of Figure 7 in which the dosing cavity 32 is in communication with the outlet 8. Liquid from the dosing cavity 32 therefore flows from the outlet 8. This flow is facilitated by air vent 34 formed in the body 4. Air flows into the dosing cavity 32 simultaneously with dispensing of liquid therefrom. Thus the pressure is continuously equalised between the interior of the dosing cavity and the exterior, ambient, environment and the liquid will flow smoothly and at the maximum possible flow rate as dictated by the size of the outlet 8.

It will be noted that in the third, dispensing, position of Figure 7, plate 20 is held away from closure 10 by a protrusion 36 extending from the plate 20. The stand-off created by protrusion 36 has been found to facilitate return movement of the dosing member 6 from the third, dispensing position by preventing formation of an air lock between the plate 20 and the closure 10 and also full engagement of the two which could result in frictional resistance to return of the dosing member 6.

That return may be achieved simply by returning the bottle or other container to the upright position and relying on gravity. However, preferably the bottle or other container is such that dispensing of the liquid creates a vacuum therein which pulls the dispensing member 6 back to the position of Figure 5 where the air carried in the dosing cavity as a result of this movement serves to equalise the pressure within the bottle or other container.

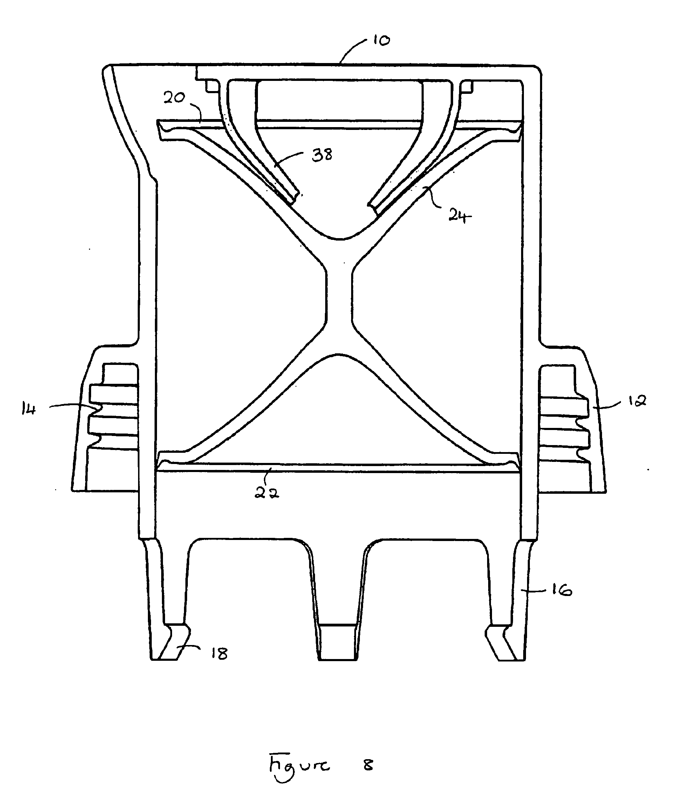

With the majority of plastic bottles, however, the positive pressure created by the bottle when squeezed is far greater than the bottle's ability to create a vacuum or return to its original shape. To ensure a reliable return of the dosing member 6, and to make the dosing cap independent of the container on which it is installed, according to the invention as illustrated in Figure 8, the dosing cap is provided with means for returning the dosing member 6.

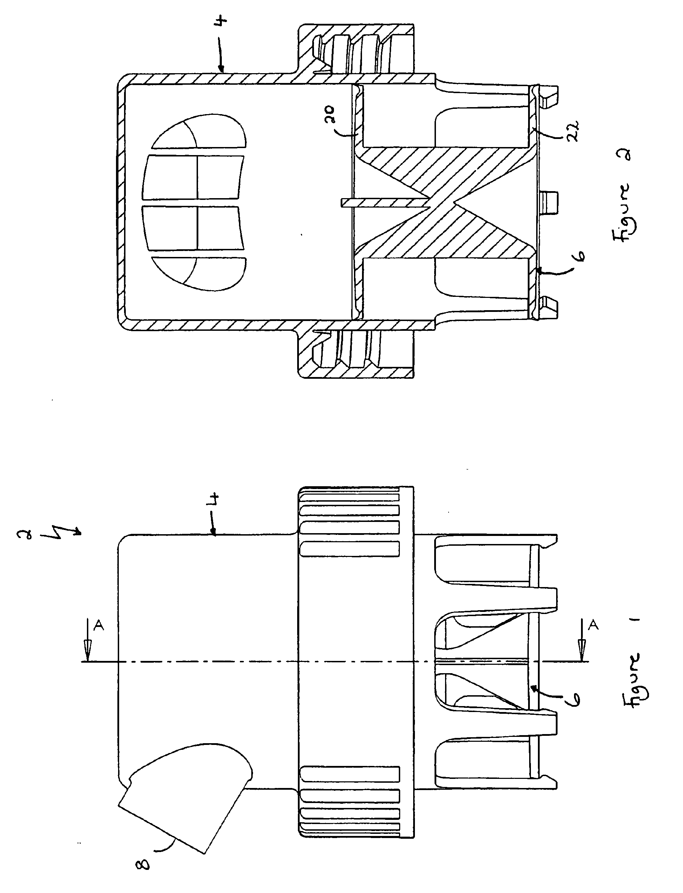

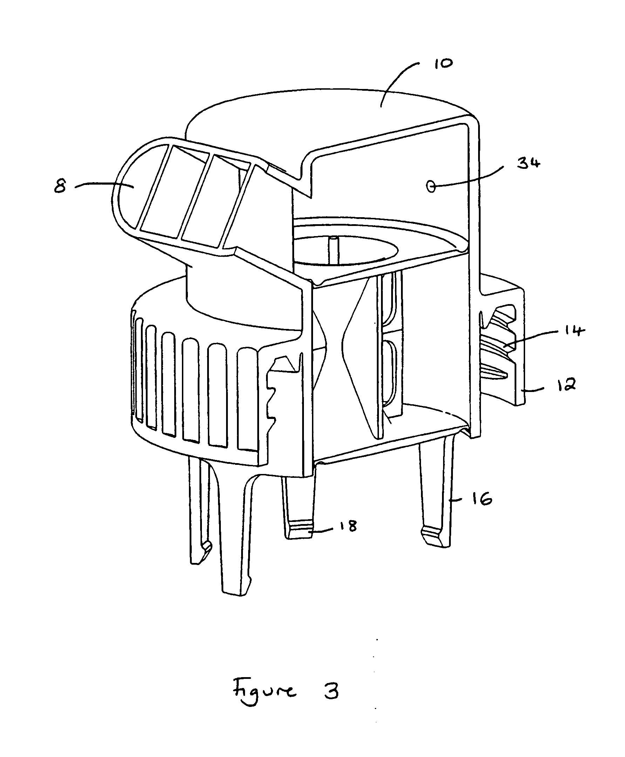

The cap of figure 8 differs from the cap of figures 1-7 by the provision of return means and like parts are therefore identified by like reference numerals.

In the second embodiment, the dosing cap 2 is provided with one or more springs 38 on the closure 10. Suitably the springs 38 take the form of leaf springs cantilevered from the closure 10 and integrally formed therewith. There may be four springs 38 evenly circumferentially spaced.

As illustrated in Figure 8, the springs 38 are engaged by the dosing member 6 as it moves to the third, dispensing, position which causes distortion of the springs 38. When the container and attached dosing cap 2 are returned to the upright position, the springs 38 bias the dosing member 6 away from the closure 10 and back to the first, filling, position. As a result the dosing member 6 is reliably returned to the first, filling, position irrespective of the container's ability to create a vacuum and without relying on gravity.

The dosing cap is relatively simple in form and so economical to manufacture. It is also easy to use. A particular advantage is that it can be used one handedly. Thus for example a busy mother carrying a child in one hand can dispense a dose of liquid with the other.

## Claims

1. A dosing cap (2) for dispensing dosed amounts of liquid from a container comprising a body (4) securable to a container, the body (4) including an outlet (8), and a dosing member (6) operatively engaged with the body (4) such as to be movable along a path relative to the body (4) from a first position through a second position to a third position, the dosing member (6) defining a space which in the first position is accessible, wherein in the second position the body (4) closes the space to form a dose cavity and in the third position the dose cavity is in communication with the outlet (8);
**characterised in that**
the dosing cap(2) is provided with means (38) for returning the dosing member (6) from the third position to the first position.

2. A dosing cap (2) as claimed in Claim 1 wherein the dosing member (6) is a shuttle reciprocally movable to and fro along the path.

3. A dosing cap (2) as claimed in either Claim 1 or Claim 2 wherein the body (4) includes structure engagable by the dosing member (6) at the first and third positions.

4. A dosing cap (2) as claimed in Claim 3 wherein the body (4) is annular and has a closure (10) at one end.

5. A dosing cap (2) as claimed in Claim 4 wherein the return means comprises biasing means, the closure including the biasing means (38) which is engaged by the dosing member (6) in the third position and which biases the dosing member away from the closure and towards the first position.

6. A dosing cap (2) as claimed in Claim 1 wherein the biasing means comprises at least one spring (38).

7. A dosing cap (2) as claimed in any one of Claims 4 to 6 wherein at the other end from the closure (10) the body (4) includes at least one depending leg (16) having an end portion shaped to engage the dosing member (6) in the first position.

8. A dosing cap (2) as claimed in Claim 4 wherein there are at least three legs (16).

9. A dosing cap (2) as claimed in any preceding claim wherein the dosing member (6) comprises a pair of plates (20, 22) interconnected by a strut (24).

10. A dosing cap (2) as claimed in Claim 9 wherein the plates (20, 22) are also interconnected by at least one web (26).

11. A dosing cap (2) as claimed in either Claim 9 or Claim 10 wherein the edges of the plates (20, 21) sealingly engage the body in the second and third positions.

12. A dosing cap (2) as claimed in Claim 11 wherein the plate edges are in the form of lip seals (28).

13. A dosing cap (2) as claimed in any one of Claims 9 to 12 wherein the strut (24) comprises two conical elements, the larger ends of the elements being connected to the plates (20, 22) and the smaller ends to each other.

14. A dosing cap (2) as claimed in any preceding claim wherein the body (4) includes securement structure for securing the body (4) to a container.

15. A dosing cap (2) as claimed in Claim 14 wherein the securement structure comprises threads (14).

16. A dosing cap (2) as claimed in any preceding claim wherein the body (4) includes an air vent (34) and wherein, in the third position, the air vent (34) is also in communication with the dose cavity.

## Patentansprüche

1. Dosierdeckel (2) zum Ausgeben dosierter Mengen von Flüssigkeit aus einem Behälter, umfassend einen Körper (4), der an einem Behälter befestigt werden kann, wobei der Körper (4) einen Auslass (8) und ein Dosierglied (6) umfasst, das derart wirksam mit dem Körper (4) in Eingriff steht, dass es entlang einer Bahn relativ zu dem Körper (4) von einer ersten Position über eine zweite Position zu einer dritten Position bewegbar ist, wobei das Dosierglied (6) einen Raum definiert, der in der ersten Position zugänglich ist, wobei in der zweiten Position der Körper (4) den Raum schließt, um einen Dosishohlraum zu bilden und in der dritten Position der Dosishohlraum mit dem Auslass (8) in Verbindung steht;
**dadurch gekennzeichnet, dass**
der Dosierdeckel (2) mit einem Mittel (38) versehen ist, um das Dosierglied (6) von der dritten Position zur ersten Position zurückzustellen.

2. Dosierdeckel (2) nach Anspruch 1, wobei es sich bei dem Dosierglied (6) um ein Schiffchen handelt, das wechselseitig entlang der Bahn hin- und herbewegbar ist.

3. Dosierdeckel (2) nach Anspruch 1 oder Anspruch 2, wobei der Körper (4) eine Struktur umfasst, mit der das Dosierglied (6) in der ersten und der dritten Position in Eingriff treten kann.

4. Dosierdeckel (2) nach Anspruch 3, wobei der Körper (4) ringförmig ist und an einem Ende einen Verschluss (10) aufweist.

5. Dosierdeckel (2) nach Anspruch 4, wobei das Rückstellmittel ein Vorspannmittel umfasst, wobei der Verschluss das Vorspannmittel (38) umfasst, mit dem das Dosiermittel (6) in der dritten Position in Eingriff steht und das das Dosierglied von dem Verschluss weg und zu der ersten Position vorspannt.

6. Dosierdeckel (2) nach Anspruch 1, wobei das Vorspannmittel mindestens eine Feder (38) umfasst.

7. Dosierdeckel (2) nach einem der Ansprüche 4 bis 6, wobei der Körper (4) am anderen Ende von dem Verschluss (10) mindestens ein herunterhängendes Bein (16) umfasst, das einen Endabschnitt aufweist, der dazu geformt ist, mit dem Dosierglied (6) in der ersten Position in Eingriff zu stehen.

8. Dosierdeckel (2) nach Anspruch 4, wobei mindestens drei Belne (16) vorgesehen sind.

9. Dosierdeckel (2) nach einem der vorangehenden Ansprüche, wobei das Dosierglied (6) ein Paar Platten (20, 22) umfasst, die durch eine Strebe (24) miteinander verbunden sind.

10. Dosierdeckel (2) nach Anspruch 9, wobei die Platten (20, 22) außerdem durch mindestens einen Steg (26) miteinander verbunden sind

11. Dosierdeckel (2) nach Anspruch 9 oder Anspruch 10, wobei die Ränder der Platten (20, 21) in der zweiten und der dritten Position dichtend mit dem Körper in Eingriff stehen.

12. Dosierdeckel (2) nach Anspruch 11, wobei die Plattenränder die Form von Lippendichtungen (28) aufweisen,

13. Dosierdeckel (2) nach einem der Ansprüche 9 bis 12, wobei die Strebe (24) zwei konische Elemente aufweist, wobei die größeren Ende der Elemente mit den Platten (20, 22) und die kleineren Enden miteinander verbunden sind.

14. Dosierdeckel (2) nach einem der vorangehenden Ansprüche, wobei der Körper (4) eine Befestigungsstruktur zum Befestigen des Körpers (4) an einem Behälter umfasst.

15. Dosierdeckel (2) nach Anspruch 14, wobei die Befestigungsstruktur Gewinde (14) umfasst.

16. Dosierdeckel (2) nach einem der vorangehenden Ansprüche, wobei der Körper (4) eine Entlüftungsöffnung (34) umfasst und wobei in der dritten Position die Entlüftungsöffnung (34) ebenfalls mit dem Dosishohlraum in Verbindung steht.

## Revendications

1. Bouchon doseur (2) pour distribuer des quantités dosées de liquide depuis un contenant comprenant un corps (4) pouvant être fixé à un contenant, le corps (4) comportant un orifice de sortie (8), et un élément doseur (6) engagé opérationnellement avec le corps (4) de façon à pouvoir se déplacer le long d'un chemin relatif au corps (4) depuis une première position jusqu'à une troisième position en passant par une deuxième position, l'élément doseur (6) définissant un espace qui est accessible à la première position, dans lequel à la deuxième position le corps (4) enferme l'espace pour former une cavité de dosage et à la troisième position la cavité de dosage est en communication avec la sortie (8);
**caractérisé en ce que**
le bouchon doseur (2) est doté d'un moyen (38) pour renvoyer l'élément doseur (6) de la troisième position à la première position.

2. Bouchon doseur (2) selon la revendication 1, dans lequel l'élément doseur (6) est un navette déplaçable selon un mouvement de va et vient le long du chemin.

3. Bouchon doseur (2) selon la revendication 1 ou 2, dans lequel le corps (4) comporte une structure engageable par l'élément doseur (6) aux première et troisième positions.

4. Bouchon doseur (2) selon la revendication 3, dans lequel le corps (4) est annulaire et comporte une fermeture (10) à une extrémité.

5. Bouchon doseur (2) selon la revendication 4, dans lequel le moyen de renvoi comprend un moyen de charge préliminaire, la fermeture comportant le moyen de charge préliminaire (38) qui est engagé par l'élément doseur (6) à la troisième position et qui charge préliminairement l'élément doseur pour l'écarter de la fermeture et vers la première position.

6. Bouchon doseur (2) selon la revendication 1, dans lequel le moyen de charge préliminaire comprend au moins un ressort (38).

7. Bouchon doseur (2) selon l'une quelconque des revendications 4 à 6, dans lequel à l'autre extrémité de la fermeture (10) le corps (4) comporte au moins un pied dépendant (16) ayant une partie d'extrémité profilée pour s'engager avec l'élément doseur (6) à la première position.

8. Bouchon doseur (2) selon la revendication 4, dans lequel il présente au moins trois pieds (16).

9. Bouchon doseur (2) selon l'une quelconque des revendications précédentes, dans lequel l'élément de dosage (6) comprend une paire de plaques (20, 22) interconnectées par une traverse (24).

10. Bouchon doseur (2) selon la revendication 9, dans lequel les plaques (20, 22) sont aussi interconnectées par au moins une âme (26).

11. Bouchon doseur (2) selon la revendication 9 ou 10, dans lequel les bords des plaques (20, 21) s'engagent de manière étanche avec le corps aux deuxième et troisième positions.

12. Bouchon doseur (2) selon la revendication 11, dans lequel les bords de plaques ont la forme de joints à lèvre (28).

13. Bouchon doseur (2) selon l'une quelconque des revendications 9 à 12, dans lequel la traverse (24) comprend deux éléments coniques, les extrémités plus grandes des éléments étant connectées aux plaques (20, 22) et les extrémités plus petites l'une à l'autre.

14. Bouchon doseur (2) selon l'une quelconque des revendications précédentes, dans lequel le corps (4) comporte une structure de fixation pour fixer le corps (4) à un contenant.

15. Bouchon doseur (2) selon la revendication 14, dans lequel la structure de fixation comprend des filets (14).

16. Bouchon doseur (2) selon l'une quelconque des revendications précédentes, dans lequel le corps (4) comporte un évent (34) et dans lequel, à la troisième position, l'évent (34) est aussi en communication avec la cavité de dosage.
